# FASCICULE DE BREVET EUROPEEN

(11) **EP 0 780 254 B1**
(45) Date de publication et mention de la délivrance du brevet: **08.03.2000**
(21) Numéro de dépôt: 96402709.8
(22) Date de dépôt: 12.12.1996
(51) Int. Cl.: B60H 1/00

(54) **Dispositif de chauffage d'appoint pour véhicule utilisant le circuit de climatisation**
Fahrzeugzusatzheizung unter Verwendung des Klimakreislaufes
Vehicle supplementary heating employing the air conditioning fluid circuit

(30) Priorité: 21.12.1995 FR 9515288
(43) Date de publication de la demande: 25.06.1997
(73) Titulaire: VALEO CLIMATISATION, 78321 La Verrière (FR)
(72) Inventeur: Karl, Stefan, 75015 Paris (FR)
(74) Mandataire: Gamonal, Didier

(56) Documents cités:
- FR-A- 2 717 126
- FR-A- 2 720 982
- US-A- 5 291 941

## Description

L'invention concerne un procédé pour régler la température d'un flux d'air à envoyer dans l'habitacle d'un véhicule, par échange de chaleur avec un évaporateur dans lequel circule un fluide réfrigérant qui passe également dans un compresseur et dans un détendeur, ce procédé comportant un mode de refroidissement du flux d'air dans lequel on fait circuler ledit fluide successivement dans l'évaporateur, dans le compresseur, dans un condenseur où il cède de la chaleur à un autre milieu et dans un détendeur, et un mode de réchauffage du flux d'air dans lequel on renvoie le fluide sortant du compresseur à l'évaporateur, sans passer par un condenseur.

L'invention a également pour objet un dispositif de climatisation de l'habitacle d'un véhicule automobile, comprenant un circuit de fluide réfrigérant comportant une première branche contenant un évaporateur suivi d'un compresseur, une seconde branche contenant un condenseur et une troisième branche ne contenant pas de condenseur, les seconde et troisième branches étant placées mutuellement en parallèle de façon à former avec la première branche respectivement une boucle de refroidissement, contenant également un premier détendeur interposé entre le condenseur et l'évaporateur, et une boucle de réchauffage, des moyens de commutation étant prévus pour commander la circulation du fluide soit dans la boucle de refroidissement, soit dans la boucle de réchauffage, et le dispositif comprenant en outre des moyens pour envoyer dans l'habitacle de l'air ayant subi un échange de chaleur avec l'évaporateur.

Un tel procédé et un tel dispositif sont connus par FR-A-2 717 126.

La puissance calorifique engendrée dans le mode de réchauffage est déterminée par le débit massique produit par le compresseur, lui-même fonction de sa vitesse d'entraînement et par suite du régime du moteur. Cette puissance peut être inférieure à celle nécessaire pour le chauffage de l'habitacle. En particulier, en cas de démarrage à basse température, la densité initiale du fluide du circuit de climatisation, et par conséquent le débit massique produit par le compresseur, sont insuffisants pour assurer un chauffage satisfaisant.

Le but de l'invention est de remédier à ces inconvénients, et de permettre une adaptation de la puissance calorifique produite aux besoins de chauffage, notamment à basse température.

L'invention vise notamment un procédé du genre défini en introduction, et prévoit que, lorsque le débit du courant de fluide circulant dans l'évaporateur dans le mode de réchauffage n'est pas suffisant pour produire la puissance calorifique souhaitée, on augmente la masse de fluide en circulation en joignant à ce courant, grâce à un effet d'aspiration produit par celui-ci, un courant incident provenant du condenseur.

Dans le dispositif selon l'invention, la boucle de réchauffage contient un éjecteur muni d'une entrée latérale qui peut être reliée à la seconde branche, par l'intermédiaire d'une quatrième branche, de façon à aspirer du fluide à partir du condenseur, sous l'effet du courant de fluide traversant l'éjecteur, pour augmenter la masse de fluide circulant dans la boucle de réchauffage.

On entend par "éjecteur" tout composant d'un circuit de fluide comportant un passage de section réduite provoquant la formation d'un jet de fluide, accompagné d'une dépression permettant l'aspiration d'un courant de fluide incident.

Des caractéristiques optionnelles du dispositif selon l'invention, complémentaires ou alternatives, sont énoncées ci-après :
- Il comprend une vanne interposée dans la quatrième branche et commandée de façon à permettre ou non la circulation du fluide dans celle-ci.
- Lesdits moyens de commutation sont propres à mettre en communication soit l'extrémité aval de la première branche avec l'extrémité amont de la seconde branche, soit simultanément l'extrémité aval de la première branche avec l'extrémité amont de la troisième branche et les extrémités amont des seconde et quatrième branches entre elles.
- Les moyens de commutation mettent en communication mutuelle les extrémités amont des troisième et quatrième branches, en même temps que l'extrémité aval de la première branche et l'extrémité amont de la seconde branche.
- L'éjecteur est disposé dans la troisième branche.
- L'éjecteur constitue également le détendeur de la boucle de chauffage.
- Un détendeur pour la boucle de chauffage est monté en série avec l'éjecteur dans la troisième branche.
- L'éjecteur est disposé dans la première branche.
- L'éjecteur est interposé entre l'évaporateur et le compresseur.
- Une conduite de dérivation munie d'une vanne commandée est placée en parallèle avec l'éjecteur.
- Un élément empêchant une circulation inverse du fluide est disposé dans la troisième branche.

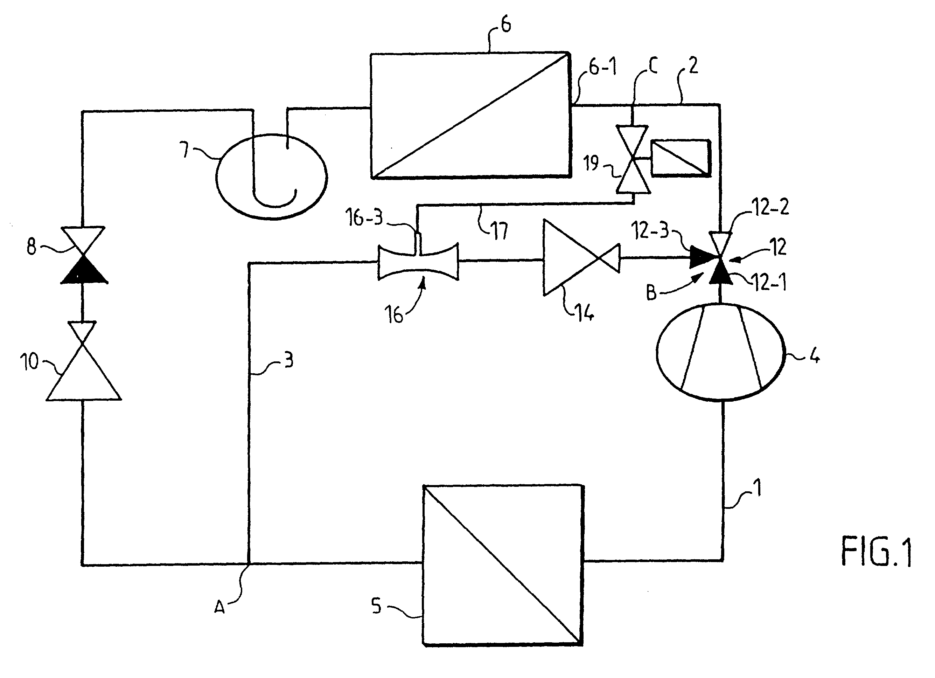

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins, les figures 1 à 4 sont des schémas de circuits de fluide de quatre dispositifs selon l'invention, pour la climatisation et le chauffage de l'habitacle d'un véhicule.

Dans ces circuits circule un fluide propre à passer de l'état liquide à l'état gazeux en absorbant de la chaleur, et de l'état gazeux à l'état liquide en cédant de la chaleur, comme c'est le cas de façon habituelle dans les installations de climatisation de véhicules. La plupart des composants de ces circuits sont également rencontrés de façon habituelle dans ces mêmes installations de climatisation.

Les composants de chaque circuit sont répartis dans trois branches 1, 2 et 3 se raccordant entre elles en deux points de jonction A et B. La branche 1 contient un compresseur 4 qui y fait circuler le fluide du point A vers le point B, et un évaporateur 5 placé en amont du compresseur. La branche 2 contient, du point B vers le point A, un condenseur 6, une bouteille 7, un clapet anti-retour 8 et un détendeur 10. Dans le circuit de la figure 1, un second détendeur 14 est placé dans la branche 3, suivi par un éjecteur 16 présentant une entrée latérale 16-3 reliée par une conduite 17 à un point C de la branche 2 situé en amont du condenseur 6. La conduite d'arrêt 17 contient une vanne d'arrêt commandée 19. Une électrovanne à trois voies 12 est placée au point de jonction B de façon que ses trois voies 12-1, 12-2 et 12-3 se raccordent respectivement à l'extrémité aval de la première branche, c'est-à-dire à la sortie du compresseur 4, à l'extrémité amont de la seconde branche, c'est-à-dire à l'entrée du condenseur 6, et à l'extrémité amont de la troisième branche, c'est-à-dire à l'entrée du détendeur 14.

La vanne 12 peut être commandée de façon à mettre en communication ses voies numérotées 1 et 2. Le fluide circule alors dans une boucle fermée formée par les branches 1 et 2, la branche 3 étant isolée. Cette boucle fonctionne comme un circuit classique de climatisation, le fluide passant de l'état liquide à l'état gazeux dans l'évaporateur 5 en absorbant de la chaleur et de l'état gazeux à l'état liquide dans le condenseur 6 en cédant de la chaleur. La chaleur absorbée dans l'évaporateur 5 peut être prélevée, directement ou indirectement, dans un flux d'air à envoyer dans l'habitacle du véhicule.

Lorsque la vanne 12 est commandée de façon à faire communiquer ses voies 1 et 3, le fluide circule dans une boucle fermée constituée par les branches 1 et 3, la branche 2 étant isolée. Le fluide traverse donc le compresseur 4, le détendeur 14, l'éjecteur 16 et l'évaporateur 5. Ne traversant plus de condenseur, il reste en permanence à l'état gazeux. L'évaporateur 5 ne joue donc plus le rôle d'évaporateur, mais continue de jouer le rôle d'échangeur de chaleur, permettant de dissiper une grande partie de la chaleur produite par la compression du fluide dans le compresseur 4, cette chaleur pouvant être utilisée pour le chauffage de l'habitacle lorsque le moteur thermique du véhicule est froid. En particulier, le fluide en circulation étant à une température supérieure à la température ambiante, un flux d'air à envoyer dans l'habitacle peut être chauffé directement au contact de l'évaporateur.

Tant que la vanne 19 est fermée, la masse de fluide circulant dans la boucle de chauffage 1, 3 est constante. L'ouverture de cette vanne peut être commandée en réponse à la détection d'un paramètre traduisant une insuffisance du débit calorifique produit par l'évaporateur 5, ou en réponse à une température de l'habitacle inférieure à un seuil. Le phénomène d'aspiration engendré par le jet de fluide dans l'éjecteur 10 extrait alors du fluide du condenseur 6, à travers l'entrée 6-1 de celui-ci, le point C, la conduite 17 et l'entrée 16-3 de l'éjecteur, le courant incident ainsi engendré se joignant dans l'éjecteur au flux circulant dans la boucle de chauffage. Pendant cette phase d'introduction de fluide dans la boucle de chauffage, le fluide continue de circuler dans l'évaporateur et d'y produire de la chaleur.

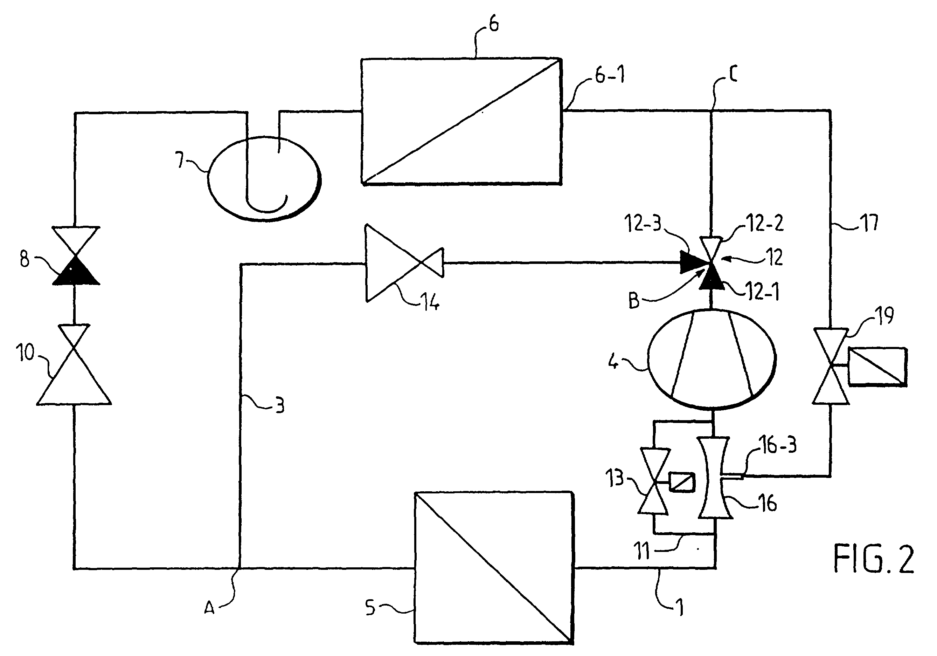

Le circuit de la figure 2 diffère de celui de la figure 1 en ce que l'éjecteur 16 est placé dans la branche 1, entre l'évaporateur 5 et le compresseur 4, en parallèle avec une conduite de dérivation 11 munie d'une vanne d'arrêt 13. Les vannes 12 et 19 sont commandées de la même façon que dans le circuit de la figure 1. En outre, dans le mode de refroidissement, la vanne 13 est ouverte de sorte que le fluide passe dans la conduite 11 et dans l'éjecteur 16. Dans le mode de réchauffage, la vanne 12 est fermée et le fluide passe dans l'éjecteur 16, qui joue alors le même rôle que dans le circuit précédemment décrit.

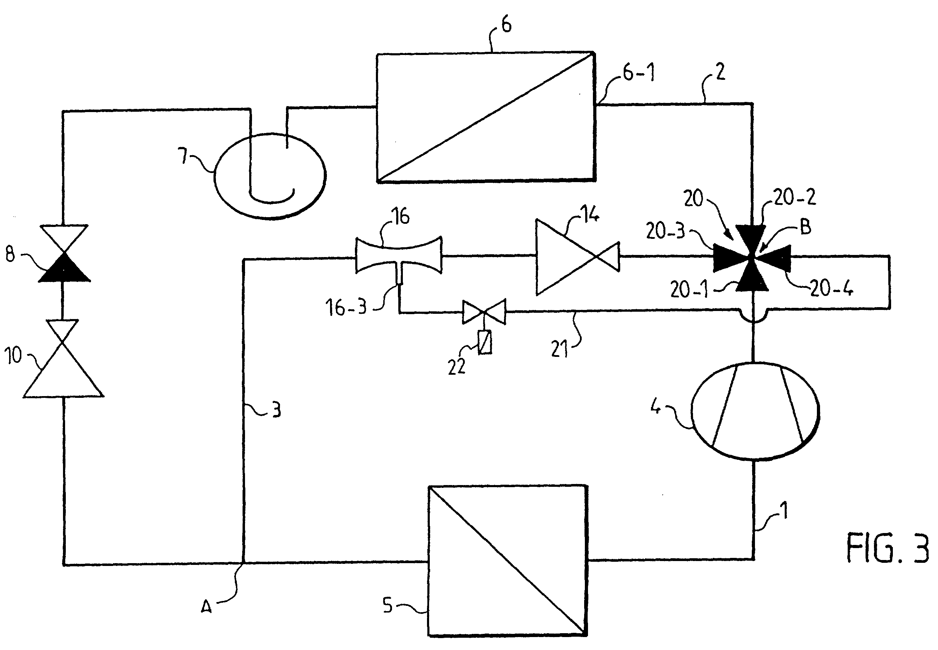

Dans le circuit de la figure 3, la vanne à trois voies 12 est remplacée par une vanne à quatre voies 20 dont trois voies 20-1, 20-2 et 20-3 sont reliées de la même façon que les voies 12-1 à 12-3 de la vanne 12 de la figure 1. La quatrième voie 20-4 est reliée par une conduite 21 à l'entrée latérale 16-3 de l'éjecteur 16, monté de la même façon qu'à la figure 1. La conduite 21 et l'électrovanne 20 remplacent donc la conduite 17 et l'électrovanne 19, le circuit étant au demeurant semblable à celui de la figure 1.

Il est prévu en outre une électrovanne 22 disposée entre l'éjecteur 16 et la vanne à quatre voies 20 de manière à obtenir pour un mode de fonctionnement à masse de fluide constante une isolation de l'entrée 6.1 du condenseur 6 et de l'entrée 16.3 de l'éjecteur lorsque la vanne 16 est fermée.

Dans le mode de refroidissement, les voies 20-1 et 20-2 communiquent entre elles, et les voies 20-3 et 20-4 communiquent aussi entre elles. Le circuit fonctionne alors comme celui de la figure 1. Dans le mode de réchauffage, les voies 20-1 et 20-3 communiquent entre elles, établissant la boucle fermée 1, 3. De plus, les voies 20-2 et 20-4 peuvent être soit isolées, pour un fonctionnement à masse de fluide constante, soit être reliées mutuellement pour permettre l'extraction de fluide du condenseur comme décrit plus haut.

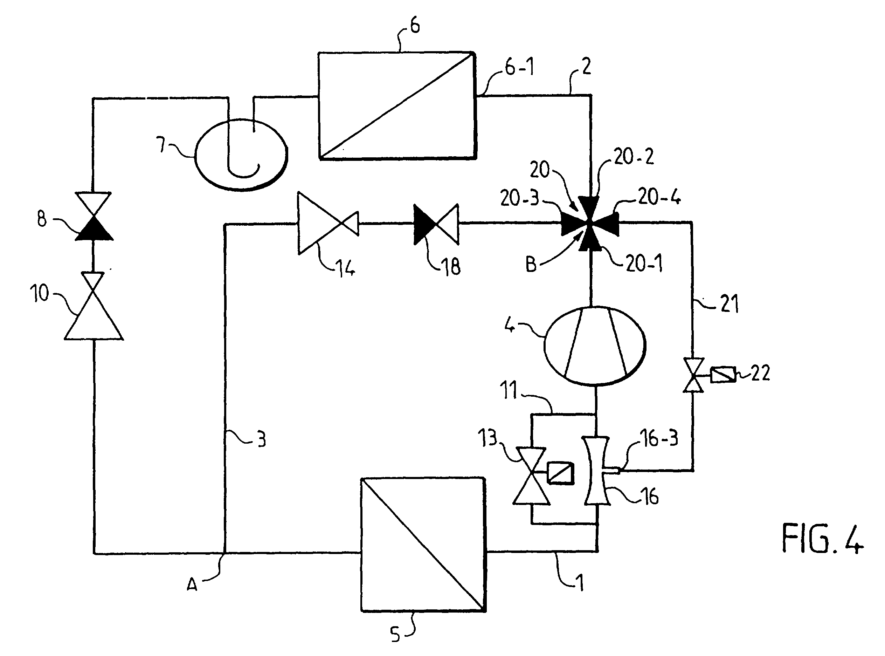

Le circuit de la figure 4 présente par rapport à celui de la figure 3 les mêmes modifications que le circuit de la figure 2 par rapport à celui de la figure 1. En d'autres termes, l'éjecteur 16 est placé dans la branche 1, entre l'évaporateur et le compresseur, en parallèle avec la conduite de dérivation 11. Chacune des vannes 13 et 20 est commandée de la manière décrite à propos des figures 2 et 3 de façon à réaliser les mêmes fonctions que pour les autres circuits. De plus, un clapet anti-retour est placé dans la branche 3 de façon à éviter que du fluide circule dans celle-ci du point 1 au point B, puis dans la conduite 21, dans le mode de refroidissement, évitant ainsi l'évaporateur.

Des simplifications peuvent être apportées aux exemples de dispositifs décrits. Ainsi, dans les circuits des figures 1 et 3, on peut faire jouer à l'éjecteur 16 également le rôle de détendeur, le détendeur 14 étant supprimé. Dans les circuits des figures 2 et 4, la conduite 11 et sa vanne 13 peuvent être supprimées. Le fluide traverse alors l'éjecteur également dans le mode de refroidissement, entraînant une perte de charge en contrepartie de cette simplification.

## Revendications

1. Procédé pour régler la température d'un flux d'air à envoyer dans l'habitacle d'un véhicule, par échange de chaleur avec un évaporateur (5) dans lequel circule un fluide réfrigérant qui passe également dans un compresseur (4) et dans un détendeur (10, 14), ce procédé comportant un mode de refroidissement du flux d'air dans lequel on fait circuler ledit fluide successivement dans l'évaporateur (5), dans le compresseur (4), dans un condenseur (6) où il cède de la chaleur à un autre milieu et dans un détendeur (10), et un mode de réchauffage du flux d'air dans lequel on renvoie le fluide sortant du compresseur à l'évaporateur, sans passer par un condenseur, caractérisé en ce que, lorsque le débit du courant de fluide circulant dans l'évaporateur dans le mode de réchauffage n'est pas suffisant pour produire la puissance calorifique souhaitée, on augmente la masse de fluide en circulation en joignant à ce courant, grâce à un effet d'aspiration produit par celui-ci, un courant incident provenant du condenseur.

2. Dispositif de climatisation de l'habitacle d'un véhicule automobile, comprenant un circuit de fluide réfrigérant comportant une première branche (1) contenant un évaporateur (5) suivi d'un compresseur (4), une seconde branche (2) contenant un condenseur (6) et une troisième branche (3) ne contenant pas de condenseur, les seconde et troisième branches étant placées mutuellement en parallèle de façon à former avec la première branche respectivement une boucle de refroidissement, contenant également un premier détendeur (10) interposé entre le condenseur et l'évaporateur, et une boucle de réchauffage (1, 3), des moyens de commutation (12, 20) étant prévus pour commander la circulation du fluide soit dans la boucle de refroidissement, soit dans la boucle de réchauffage, et le dispositif comprenant en outre des moyens pour envoyer dans l'habitacle de l'air ayant subi un échange de chaleur avec l'évaporateur, caractérisé en ce que la boucle de réchauffage contient un éjecteur (16) muni d'une entrée latérale (16-3) qui peut être reliée à la seconde branche, par l'intermédiaire d'une quatrième branche (17), de façon à aspirer du fluide à partir du condenseur, sous l'effet du courant de fluide traversant l'éjecteur, pour augmenter la masse de fluide circulant dans la boucle de réchauffage.

3. Dispositif selon la revendication 2, caractérisé en ce qu'il comprend une vanne (19, 22) interposée dans la quatrième branche (17, 21) et commandée de façon à permettre ou non la circulation du fluide dans celle-ci.

4. Dispositif selon l'une des revendications 2 et 3, caractérisé en ce que lesdits moyens de commutation (20) sont propres à mettre en communication soit l'extrémité aval (20-1) de la première branche (1) avec l'extrémité amont (20-2) de la seconde branche (2), soit simultanément l'extrémité aval (20-1) de la première branche (1) avec l'extrémité amont (20-3) de la troisième branche (3) et les extrémités amont (20-2, 20-4) des seconde et quatrième branches (2, 21) entre elles.

5. Dispositif selon la revendication 4, caractérisé en ce que les moyens de commutation mettent en communication mutuelle les extrémités amont (20-3, 20-4) des troisième et quatrième branches (3, 21), en même temps que l'extrémité aval (20-1) de la première branche (1) et l'extrémité amont (20-2) de la seconde branche (2).

6. Dispositif selon l'une des revendications 3 à 5, caractérisé en ce que l'éjecteur (16) est disposé dans la troisième branche (3).

7. Dispositif selon la revendication 6, caractérisé en ce que l'éjecteur constitue également le détendeur de la boucle de chauffage.

8. Dispositif selon la revendication 6, caractérisé en ce qu'un détendeur (14) pour la boucle de chauffage est monté en série avec l'éjecteur (16) dans la troisième branche.

9. Dispositif selon l'une des revendications 3 à 5, caractérisé en ce que l'éjecteur (16) est disposé dans la première branche (1).

10. Dispositif selon la revendication 9, caractérisé en ce que l'éjecteur (16) est interposé entre l'évaporateur (5) et le compresseur (4).

11. Dispositif selon l'une des revendications 9 et 10, caractérisé en ce qu'une conduite de dérivation (11) munie d'une vanne commandée (13) est placée en parallèle avec l'éjecteur (16).

12. Dispositif selon l'une des revendications 9 à 11, caractérisé en ce qu'un élément empêchant une circulation inverse du fluide est disposé dans la troisième branche.

## Claims

1. A method of regulating the temperature of an air flow to be delivered into the cabin of a vehicle, by heat exchange with an evaporator (5) in which there flows a refrigerant fluid that also passes through a compressor (4) and an expansion device (10, 14), the method including a mode of cooling the air flow, in which the said fluid is caused to flow successively through the evaporator (5), the compressor (4), a condenser (6) in which it yields heat to another medium, and an expansion device (10), and a mode of heating the air flow, in which the fluid leaving the compressor is passed back to the evaporator without going through a condenser, characterised in that, when the mass flow of the stream of fluid flowing in the evaporator in the heating mode is insufficient to produce the required thermal power, the mass of fluid in circulation is augmented by adding to the said stream, by virtue of an aspiration effect produced by the latter, an incident stream derived from the condenser.

2. An air conditioning apparatus for the cabin of a motor vehicle, comprising a refrigerant fluid circuit having a first branch (1) containing an evaporator (5) followed by a compressor (4), a second branch (2) containing a condenser (6), and a third branch (3) containing no condenser, the second and third branches being placed in parallel with each other in such a way as to define with the first branch, respectively, a cooling loop which also contains a first expansion device (10) interposed between the condenser and the evaporator, and a heating loop (1, 3), with flow switching means (12, 20) being provided for controlling the flow of the fluid into either the cooling loop or the heating loop, and the apparatus further including means for delivering into the cabin air which has undergone heat exchange with the evaporator, characterised in that the heating loop contains an ejector (16) having a side inlet (16-3) which is able to be connected to the second branch through an interposed fourth branch (17), in such a way as to aspirate fluid from the condenser under the effect of the stream of fluid passing through the ejector, whereby to augment the mass of fluid flowing in the heating loop.

3. Apparatus according to Claim 2, characterised in that it includes a valve (19, 22) interposed in the fourth branch (17, 21) and controlled in such a way as to permit or prohibit flow of the fluid in the latter.

4. Apparatus according to Claim 2 or Claim 3, characterised in that the said flow switching means (20) are arranged to put into communication either the downstream end (20-1) of the first branch (1) with the upstream end (20-2) of the second branch (2), or, simultaneously, the downstream end (20-1) of the first branch (1) with the upstream end (20-3) of the third branch (3) and the upstream ends (20-2, 20-4) of the second and fourth branches (2, 21) with each other.

5. Apparatus according to Claim 4, characterised in that the flow switching means put into communication with each other the upstream ends (20-3, 20-4) of the third and fourth branches (3, 21), at the same time as the downstream end (20-1) of the first branch (1) and the upstream end (20-2) of the second branch (2).

6. Apparatus according to one of Claims 3 to 5, characterised in that the ejector (16) is disposed in the third branch (3).

7. Apparatus according to Claim 6, characterised in that the ejector also constitutes the expansion device of the heating loop.

8. Apparatus according to Claim 6, characterised in that an expansion device (14) for the heating loop is connected in series with the ejector (16) in the third branch.

9. Apparatus according to one of Claims 3 to 5, characterised in that the ejector (16) is disposed in the first branch (1).

10. Apparatus according to Claim 9, characterised in that the ejector (16) is interposed between the evaporator (5) and the compressor (4).

11. Apparatus according to Claim 9 or Claim 10, characterised in that a bypass duct (11), having a controllable valve (13), is connected in parallel with the ejector (16).

12. Apparatus according to one of Claims 9 to 11, characterised in that an element for preventing reverse flow of the fluid is disposed in the third branch.

## Patentansprüche

1. Verfahren zur Regelung der Temperatur eines in den Fahrgastraum eines Fahrzeugs einzuleitenden Luftstroms durch Wärmeaustausch mit einem Verdampfer (5), in dem ein Kältemittel umläuft, das auch in einen Kompressor (4) und ein Druckminderventil (10, 14) strömt, wobei dieses Verfahren eine Betriebsart zur Kühlung des Luftstroms umfaßt, bei dem das besagte Kältemittel nacheinander in den Verdampfer (5), in den Kompressor (4), in einen Kondensator (6), in dem es Wärme an ein anderes Medium abgibt, und in ein Druckminderventil (10) geleitet wird, und eine Betriebsart zur Erwärmung des Luftstroms, bei dem das aus dem Kompressor austretende Kältemittel ohne Durchgang durch einen Kondensator zurück zum Verdampfer geleitet wird, **dadurch gekennzeichnet**, daß, wenn der Durchsatz des Kältemittelstroms, der im Erwärmungsbetrieb im Verdampfer zirkuliert, nicht ausreicht, um die gewünschte Wärmeleistung zu erzeugen, die zirkulierende Kältemittelmasse vergrößert wird, indem diesem Strom aufgrund einer durch diesen erzeugten Saugwirkung eine vom Kondensator kommende eintreffende Strömung hinzugefügt wird.

2. Vorrichtung zur Klimatisierung des Fahrgastraums eines Kraftfahrzeugs, umfassend einen Kältemittelkreislauf mit einem ersten Strang (1), der einen Verdampfer (5) mit einem nachfolgenden Kompressor (4) enthält, einem zweiten Strang (2), der einen Kondensator (6) enthält, und einem dritten Strang (3), der keinen Kondensator enthält, wobei der zweite und der dritte Strang parallel zueinander angeordnet sind, um zusammen mit dem ersten Strang einen Kühlkreislauf, der außerdem ein zwischen dem Kondensator und dem Verdampfer eingefügtes erstes Druckminderventil (10) enthält, und einen Erwärmungskreislauf (1, 3) zu bilden, wobei Umschaltmittel (12, 20) vorgesehen sind, um die Zirkulation des Kältemittels entweder im Kühlkreislauf oder im Erwärmungskreislauf zu steuern, und wobei die Vorrichtung außerdem Mittel umfaßt, um Luft, an der ein Wärmeaustausch mit dem Verdampfer erfolgt ist, in den Fahrgastraum zu leiten, **dadurch gekennzeichnet**, daß der Erwärmungskreislauf eine Saugstrahlpumpe (16) mit einem seitlichen Einlaß (16-3) enthält, der über einen vierten Strang (17) mit dem zweiten Strang verbunden werden kann, um unter der Einwirkung des durch die Saugstrahlpumpe strömenden Kältemittelstroms Kältemittel aus dem Kondensator anzusaugen und dadurch die im Erwärmungskreislauf zirkulierende Kältemittelmenge zu vergrößern.

3. Vorrichtung nach Anspruch 2, **dadurch gekennzeichnet**, daß sie ein in den vierten Strang (17, 21) eingefügtes und gesteuertes Ventil (19, 22) umfaßt, um die Zirkulation oder Nichtzirkulation des Kältemittels in diesem Strang zu ermöglichen.

4. Vorrichtung nach einem der Ansprüche 2 und 3, **dadurch gekennzeichnet**, daß die besagten Umschaltmittel (20) entweder das hintere Ende (20-1) des ersten Strangs (1) mit dem vorderen Ende (20-2) des zweiten Strangs (2) oder gleichzeitig das hintere Ende (20-1) des ersten Strangs (1) mit dem vorderen Ende (20-3) des dritten Strangs (3) und die vorderen Enden (20-2, 20-4) des zweiten und vierten Strangs (2, 21) miteinander in Verbindung bringen.

5. Vorrichtung nach Anspruch 4, **dadurch gekennzeichnet**, daß die Umschaltmittel die vorderen Enden (20-3, 20-4) des dritten und vierten Strangs (3, 21) und gleichzeitig das hintere Ende (20-1) des ersten Strangs (1) und das vordere Ende (20-2) des zweiten Strangs (2) miteinander in Verbindung bringen.

6. Vorrichtung nach einem der Ansprüche 3 bis 5, **dadurch gekennzeichnet**, daß die Saugstrahlpumpe (16) im dritten Strang (3) angeordnet ist.

7. Vorrichtung nach Anspruch 6, **dadurch gekennzeichnet**, daß die Saugstrahlpumpe außerdem das Druckminderventil des Heizkreislaufs bildet.

8. Vorrichtung nach Anspruch 6, **dadurch gekennzeichnet**, daß ein Druckminderventil (14) für den Heizkreislauf im dritten Strang mit der Saugstrahlpumpe (16) in Reihe geschaltet ist.

9. Vorrichtung nach einem der Ansprüche 3 bis 5, **dadurch gekennzeichnet**, daß die Saugstrahlpumpe (16) im ersten Strang (1) angeordnet ist.

10. Vorrichtung nach Anspruch 9, **dadurch gekennzeichnet**, daß die Saugstrahlpumpe (16) zwischen dem Verdampfer (5) und dem Kompressor (4) eingefügt ist.

11. Vorrichtung nach einem der Ansprüche 9 und 10, **dadurch gekennzeichnet**, daß eine Abzweigleitung (11) mit einem gesteuerten Ventil (13) parallel mit der Saugstrahlpumpe (16) angeordnet ist.

12. Vorrichtung nach einem der Ansprüche 9 bis 11, **dadurch gekennzeichnet**, daß ein Element, das eine entgegengesetzte Zirkulation des Kältemittels verhindert, im dritten Strang angeordnet ist.
